# EUROPEAN PATENT APPLICATION

(11) **EP 3 599 389 A1**
(43) Date of publication of application: **29.01.2020**
(21) Application number: 19186274.7
(22) Date of filing: 15.07.2019
(51) Int. Cl.: F16D 3/38, G01D 21/02

(54) **ROTATING SHAFT MOUNTED MONITORING DEVICE WITH WIRELESS TRANSMITTER**

(30) Priority: 13.07.2018 US 201862697841 P
(71) Applicant: Weasler Engineering, Inc., West Bend, WI 53040 (US)
(72) Inventor: HANSEN, George N., Rubicon, WI 53078 (US)
(74) Representative: Vinsome, Rex Martin

(57) **Abstract**

A monitoring device, an assembly and a method of assembling a monitoring device and a universal joint. The monitoring device may include a device housing including a body portion and a threaded portion extending from the housing portion, the threaded portion being configured to be inserted into and threadedly engage the port to connect the device housing to a trunnion housing of a universal joint for movement with the trunnion housing relative to a support; and a sensor positioned within the device housing to sense at least one characteristic of the universal joint.

## Description

### FIELD

The present invention generally relates to moving or rotating components, such as universal joints (e.g., Cardan joints), gear boxes with shafts, etc. and, more particularly, to sensors with such rotating components.

### SUMMARY

In one independent aspect, an assembly, for a vehicle, such as an off-road vehicle, agricultural equipment, on-road vehicle, etc., may generally include a rotating component (e.g., a universal joint, a Cardan joint, a gear box shaft, etc.) and a sensor supported on the rotating component for movement therewith, the sensor being operable to sense a condition (e.g., operable to sense temperature, vibration, velocity, etc.) and to wirelessly transmit a signal indicative of the condition.

In another independent embodiment, a monitoring device for use with a moving or rotating mechanical component (e.g., a universal joint, a Cardan joint, a gear box shaft, etc.) may be provided. The universal joint may include a joint housing (e.g., a trunnion housing) operable to move relative to a support (e.g., a frame of a vehicle or equipment) and defining a threaded port. The monitoring device may generally include a device housing with a body portion and a threaded portion extending from the body portion, the threaded portion being insertable into and threadedly engageable with the port to connect the device housing to the trunnion housing for movement with the trunnion housing relative to the support, and a sensor positioned within the device housing and operable to sense at least one characteristic of the universal joint.

In yet another independent embodiment, an assembly may generally include a rotating mechanical component with a component housing operable to move relative to a support and defining a threaded port and a monitoring device. The monitoring device may include a device housing with a body portion and a threaded portion extending from the body portion, the threaded portion being insertable into and threadedly engageable with the port to connect the device housing to the component housing for movement with the component housing relative to the support, and a sensor positioned within the device housing and operable to sense at least one characteristic of the mechanical component.

In a further independent embodiment, a method for assembling a monitoring device and a universal joint may be provided. The monitoring device may include a housing with a body portion and a threaded portion extending from the body portion, and a sensor supported in the housing. The method may generally include removing a cover from a lubricant port of a trunnion housing of the universal joint, inserting the threaded portion of the monitoring device into the lubricant port, and threadedly engaging the threaded portion and the lubricant port.

Other independent aspects of the disclosure may become apparent by consideration of the detailed description, claims and accompanying drawings.

### BRIEF DESCRIPTION OF THE DRAWINGS

Fig. 1 is a perspective view of a monitoring device for a mechanical component.
Fig. 2 is an exploded view of the monitoring device of Fig. 1.
Fig. 3 is a block diagram depicting electronic components of the monitoring device of Fig. 1.
Fig. 4 is a perspective view of the monitoring device shown in Fig. 1 coupled to a mechanical component, such as a trunnion of a universal joint.
Fig. 5 is a cross-sectional view of the trunnion with the monitoring device inserted into the port of the trunnion.
Fig. 6 is a perspective view of the universal joint coupled to the monitoring device of Fig. 1.
Fig. 7 is a perspective view of the universal joint with a guard.
Fig. 8 is a graph of data sensed by the monitoring device.
Fig. 9 includes a graph of data compared to a path of a vehicle in a field.

### DETAILED DESCRIPTION

Before any independent embodiments of the disclosure are explained in detail, it is to be understood that the disclosure is not limited in its application to the details of construction and the arrangement of components set forth in the following description or illustrated in the accompanying drawings. The disclosure is capable of other independent embodiments and of being practiced or of being carried out in various ways. Also, it is to be understood that the phraseology and terminology used herein are for the purpose of description and should not be regarded as limiting.

The use of "including," "comprising," "having," and variations thereof herein are meant to encompass the items listed thereafter and equivalents thereof, as well as additional items. Unless specified or limited otherwise, the terms "mounted," "connected," "supported," "coupled," and variations thereof are used broadly and encompass both direct and indirect relationships.

Relative terminology, such as, for example, "about", "approximately", "substantially", etc., used in connection with a quantity or condition would be understood by those of ordinary skill to be inclusive of the stated value and has the meaning dictated by the context (for example, the term includes at least the degree of error associated with the measurement of, tolerances (e.g., manufacturing, assembly, use, etc.) associated with the particular value, etc.). Such terminology should also be considered as disclosing the range defined by the absolute values of the two endpoints. For example, the expression "from about 2 to about 4" also discloses the range "from 2 to 4". The relative terminology may refer to plus or minus a percentage (e.g., 1%, 5%, 10% or more) of an indicated value.

Also, the functionality described herein as being performed by one component may be performed by multiple components in a distributed manner. Likewise, functionality performed by multiple components may be consolidated and performed by a single component. Similarly, a component described as performing particular functionality may also perform additional functionality not described herein. For example, a device or structure that is "configured" in a certain way is configured in at least that way but may also be configured in ways that are not listed.

Furthermore, some embodiments described herein may include one or more electronic processors configured to perform the described functionality by executing instructions stored in non-transitory, computer-readable medium. Similarly, embodiments described herein may be implemented as non-transitory, computer-readable medium storing instructions executable by one or more electronic processors to perform the described functionality. As used in the present application, "non-transitory computer-readable medium" comprises all computer-readable media but does not consist of a transitory, propagating signal. Accordingly, non-transitory computer-readable medium may include, for example, a hard disk, a CD-ROM, an optical storage device, a magnetic storage device, a ROM (Read Only Memory), a RAM (Random Access Memory), register memory, a processor cache, or any combination thereof.

Many of the modules and logical structures described are capable of being implemented in software executed by a microprocessor or a similar device or of being implemented in hardware using a variety of components including, for example, application specific integrated circuits ("ASICs"). Terms like "controller" and "module" may include or refer to both hardware and/or software. Capitalized terms conform to common practices and help correlate the description with the coding examples, equations, and/or drawings. However, no specific meaning is implied or should be inferred simply due to the use of capitalization. Thus, the claims should not be limited to the specific examples or terminology or to any specific hardware or software implementation or combination of software or hardware.

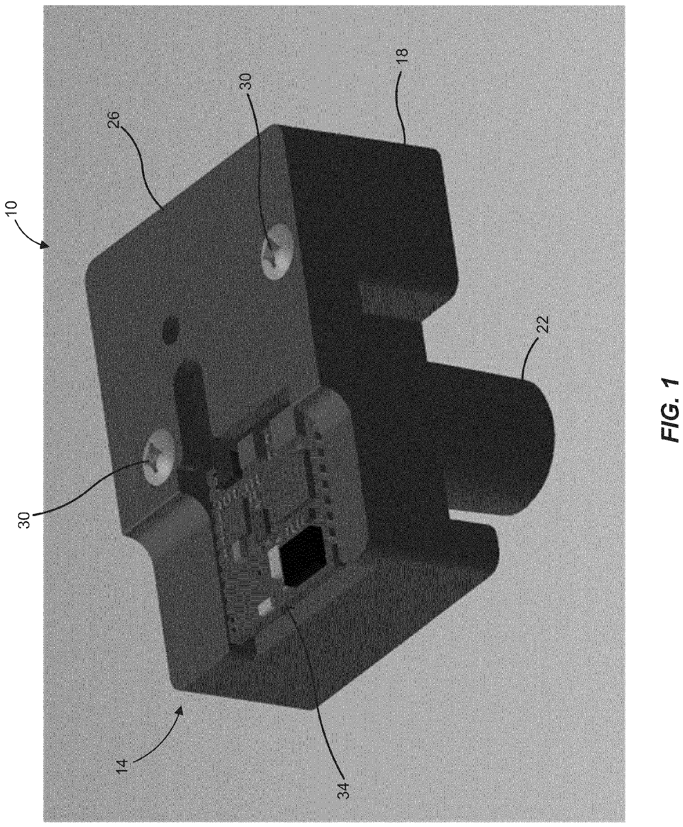

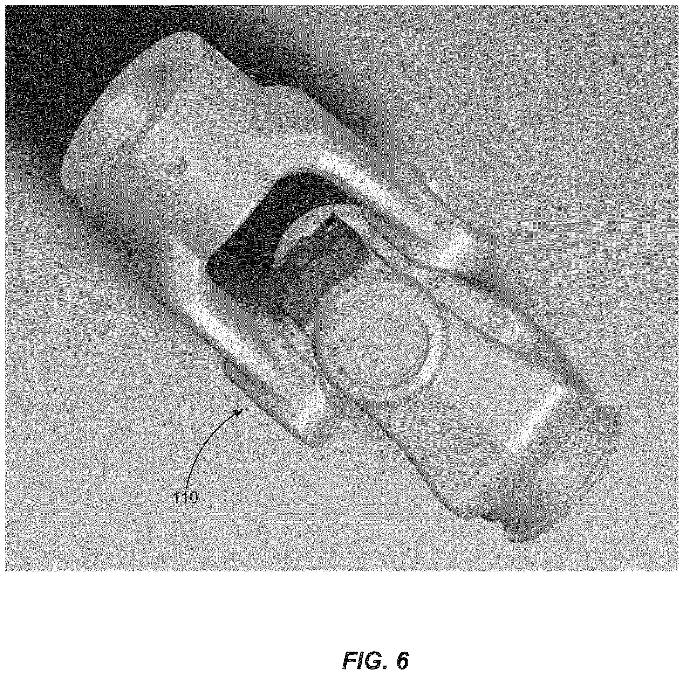

Figs. 1-2 illustrate monitoring device 10 operable to monitor one or more conditions of a mechanical component 110, such as the universal joint (see Fig. 6), which may be or include a rotating component (e.g., in a vehicle, such as an on-road vehicle, an off-road vehicle, agricultural equipment (e.g., a tractor)). The monitoring device 10 monitors the condition(s) of the mechanical component 110 during movement of the mechanical component 110 relative to the support (e.g., a frame (not shown) of the vehicle or equipment) to, for example, help a user determine operational conditions, when maintenance may be necessary, when failure may occur, etc.

The illustrated monitoring device 10 includes a housing 14 with a main body portion 18 and a threaded portion 22. A cover 26 may be secured to the main body portion 18, e.g., using fastening devices 30 (such as screws), adhesive, etc., to enclose and protect electronic components 34 positioned in the housing 14.

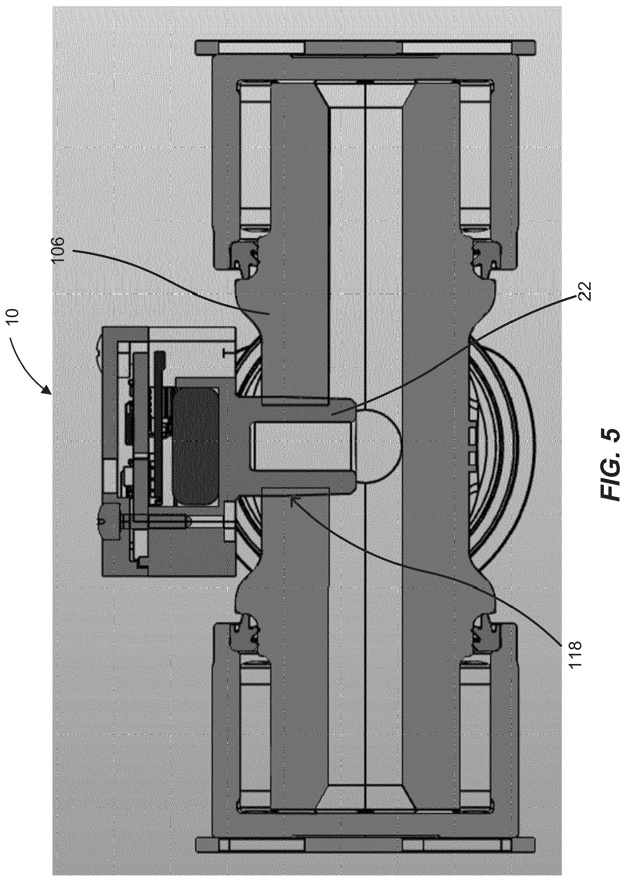

The threaded portion 22 extends from the main body 18 to enable the monitoring device 10 to be coupled to the mechanical component 110. In particular, the threaded portion 22 is configured to be inserted into and threadedly engaged with a port 118 (shown in Fig. 5) of the mechanical component 110 to connect the monitoring device 10 to the mechanical component 110. In other constructions (not shown), the monitoring device 10 may be connected in another manner (e.g., a friction fit between the threaded portion 22 and the port 118, fasteners connecting the housing 14 to the mechanical component 110, etc.).

The monitoring device 10 may also include a thermal barrier to reduce heat transfer between the mechanical component 110 and electronic components 34 of the monitoring device 10 positioned within the housing 14. The housing 14 is waterproof to protect the electronic components 34 positioned within the housing 14. The housing 14 is also shockproof to protect the electronic components 34 in the event that the monitoring device 10 or the mechanical component 110 to which the monitoring device 10 is attached is impacted. To achieve the waterproof and shockproof characteristics of the housing 14, the electronic components 34 in the housing 14 may be encased, encapsulated, potted in an epoxy or a resin.

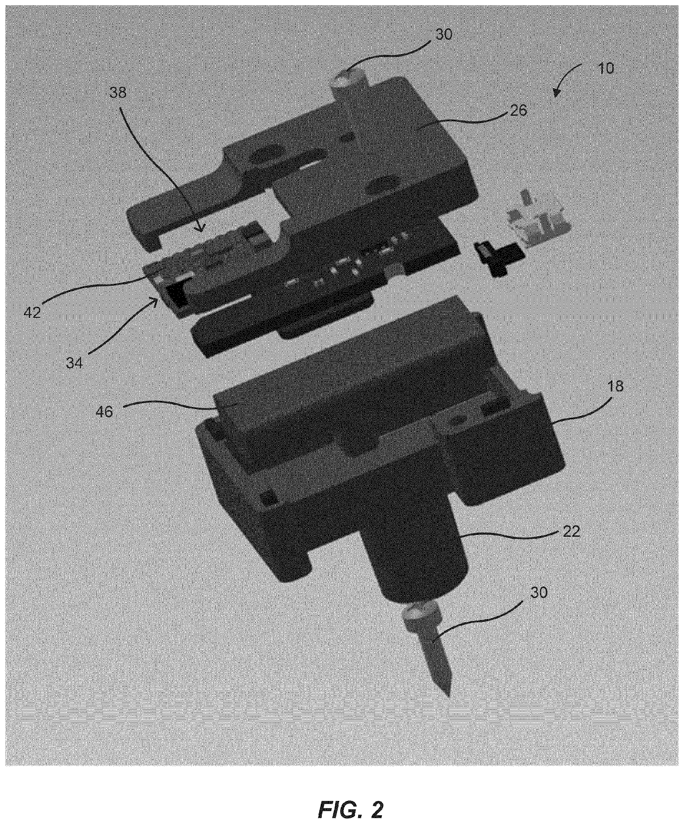

As shown in Fig. 2, the monitoring device 10 includes a circuit board 38. The monitoring device 10 also includes microelectronics 42 including one or more sensors, control electronics, communication devices, etc. The microelectronics 42 are disposed within the housing 14 of the monitoring device 10.

The sensors may include one or more temperature sensors, vibration sensors, speed sensors, Hall effect sensors, position sensors, pressure sensors, accelerometers, gyroscopes, other types of sensors, combinations thereof, to sense, measure, determine a characteristic, an operating condition, etc. of a mechanical component 110, the vehicle, etc., to which the monitoring device 10 is coupled. In some examples, the one or more sensors may be coupled to the circuit board 38 positioned in the housing 14 of the monitoring device 10.

Alternatively or additionally, one or more sensors may be positioned within a different part of the housing 10, for example, in the threaded portion 22. Particularly, a temperature sensor may be positioned within the threaded portion 22 of the housing 14 to be in closer proximity to areas of increased temperature, to obtain temperature measurements that are not affected by a thermal barrier of the housing 14, etc.

Because wires for power transmission are also not suitable for a moving or rotating sensor assembly, the monitoring device 10 also includes (see Fig. 2) an energy storage device 46 (e.g., a battery) supported in the housing 14. The battery may be rechargeable, and the monitoring device 10 may include an energy harvesting device mounted in the housing 14 and operable to generate energy (e.g., kinetic energy) from operation of the mechanical component 110, the vehicle, etc., to charge the battery. Alternatively, the battery may be replaceable when discharged.

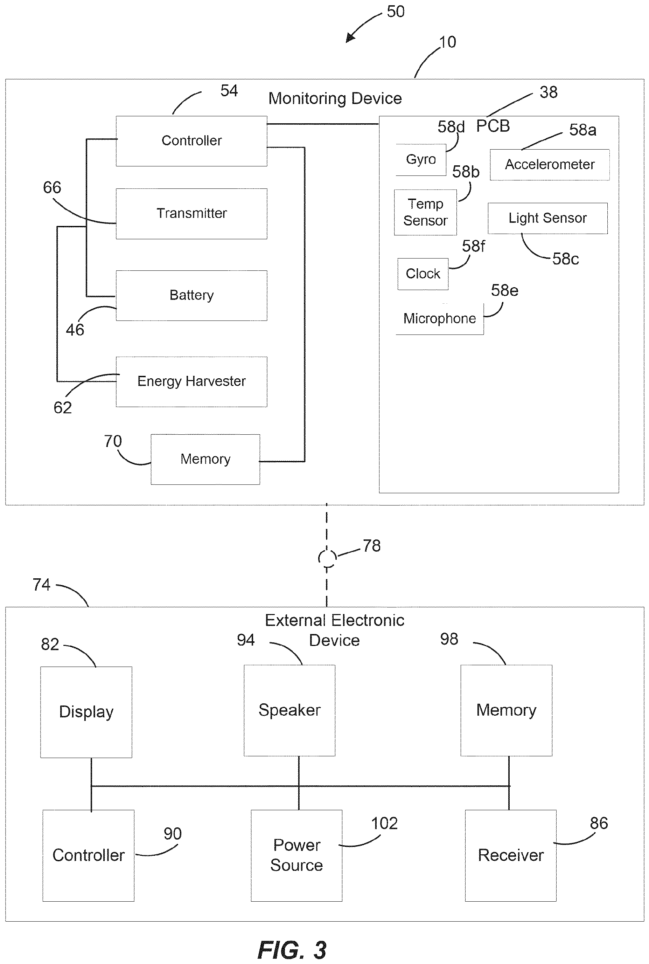

Fig. 3 is a block diagram 50 depicting an example circuit board 38 and other electronic components that may be positioned within the housing 14. Parts of the mechanical component 110 are not integrated with the monitoring device 10 illustrated in the block diagram 50. However, in alternative constructions (not shown), the monitoring device 10 may be integrally connected to a mechanical component 110.

The monitoring device 10 also includes a controller 54 connected to the circuit board 38. The controller 54 controls operation of the one or more sensors 58a-58f, the energy harvester 62, the battery 46, and a communication device (e.g., a wireless transceiver 66 (to transmit and receive data), etc.) and communicates with an external electronic device 74 (e.g., an operator workstation or a machine controller).

The controller 54 is operable to monitor operational characteristics of (e.g., voltage, capacity, temperature, etc.) and control the battery 46. For example, the controller 54 can determine when the capacity of the battery 46 low and may then activate an energy harvester 62 to provide energy to charge the battery 46. Thereafter, the controller 54 may deactivate the energy harvester 62 when the battery 46 is charged above a threshold. The controller 54 may also be operable to alert a user if the capacity of the battery 46 is low, particularly if the monitoring device 10 does not include an energy harvester 62, so that the user can charge or replace the battery 46.

The controller 54 may receive signals from the one or more sensors 58a-58f and store representative data in a memory 70. The one or more sensors 58a-58f of the illustrated monitoring device 10 may include, for example, an accelerometer 58a, a temperature sensor 58b, a light sensor 58c, a gyroscope 58d, a microphone 58e, and a clock 58f. The accelerometer 58a is positioned close to or on the axis of movement (e.g., along the axis of the threaded portion 22) and is operable to sense position, movement, vibration of the component 110, adjacent components, and the controller 54 may make determination based on the sensed condition (e.g., determine a joint angle, a vibration frequency, etc.). For example, given or after learning a normal frequency curve, the controller 54 can determine if a vibration frequency changes or is off the curve to alert the user to a potential need for maintenance.

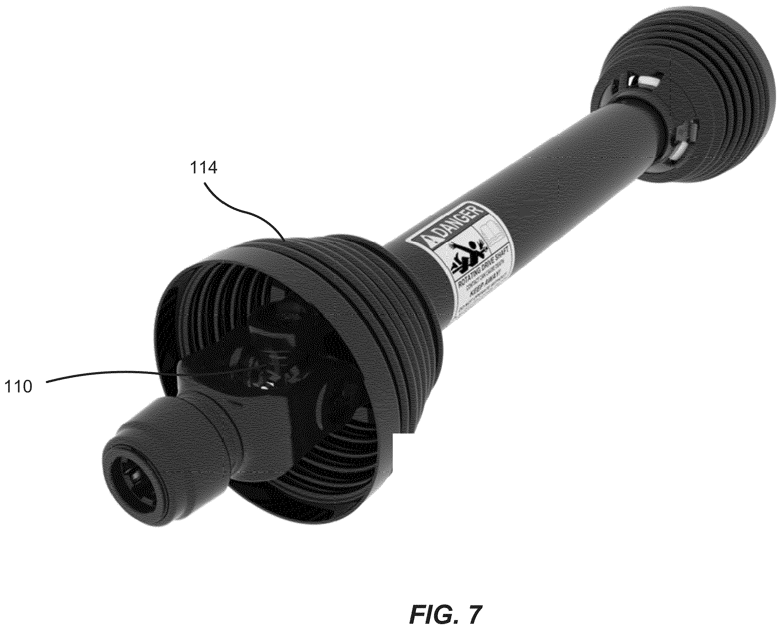

The temperature sensor 58b senses the operating temperature of the component 110. The light sensor 58c can be used to detect whether a covering member (e.g., a guard 114 (shown in Fig. 7)) is in position, covering the component 110 (e.g., sensing "light" indicates that the guard 114 is not in position). The gyroscope 58d can sense the orientation of the component 110. A microphone 58e can receive an audible signal, and an increased noise level, may indicate an undesirable condition (e.g. excess vibration, failure of bearings, etc.), which potentially needs maintenance or a change in operation.

The clock 58f senses operating time of the component 110 and may also be used to determine when to transmit data from the controller 54 to the external electronic device. That is, if the controller 54 is to transmit data gathered by the sensors 58a-58f on a predetermined time interval, the controller 54 can use signals from the clock 58f to determine when the data should be transmitted. Monitoring of operating time by the clock 58f may be triggered by a signal from another sensor (e.g., the accelerometer 58a sensing vibrations) directly or through the controller 54 indicating operation of the vehicle.

The controller 54 may be operable to transmit data via the transceiver 66 to an electronic device 74 (e.g., an operator workstation) external to the monitoring device 10. Alternatively or additionally, the monitoring device 10 may communicate data to an intermediate stationary node 78, from which user may collect the data using another device. The node 78 includes at least a controller, a transceiver, and a memory.

The transceiver 66 may be a Bluetooth, radio frequency identification (RFID), near field communication (NFC), or other type of transmitter. The wireless transceiver 66 may communicate via a wireless protocol, including but not limited to Bluetooth, Wireless Internet (WiFi), and/or a Cellular Network. Because the monitoring device 10 is mounted on the rotating component 110 (e.g., spinning bearing) rather than a fixed component, wired communication is not feasible, and communication may be limited to certain wireless data transfer protocols. NFC availability may also not be practical because the monitoring device 10 is constantly in motion.

The transceiver 66 may be operable to communicate data continuously, at predetermined time intervals, if one of the characteristics measured by the one or more sensors 58a-58f passes a predefined threshold, and combinations thereof. For example, if a signal from an accelerometer 58a reaches or exceeds a threshold, the signal may indicate excessive vibration in the component 110 or an adjacent component which may cause, precede or indicate damage to the component 110.

By sending a signal to the external electronic device 74, the monitoring device 10 can alert a user of a potential need for maintenance, change in operation or other adjustment, and the user can make a determination whether to continue using the vehicle or to stop using the vehicle until the condition of the component 110 can be further evaluated. The external electronic device 74 may be a user interface of a vehicle or may be a standalone user interface including at least a display 82, a communication device (e.g., a transceiver 86), a controller 90, a speaker 94, a memory 98, and a power source 102. The power source 102 may be a battery (e.g., an onboard vehicle battery) or may be any other suitable source of power (e.g., such as from a power outlet).

Signals and alerts from the monitoring device 10 may be communicated to the user via the display 82 and/or the speaker 94 of the external electronic device 74. The controller 90 is in communication with the display 82, the speaker 94, and the transceiver 86 such that signals received from the monitoring device 10 can be processed and communicated to the user via the external electronic device 74. Signals (e.g., user commands) can also be sent from the external electronic device 74 to the monitoring device 10 through communication between the transceivers 66, 86.

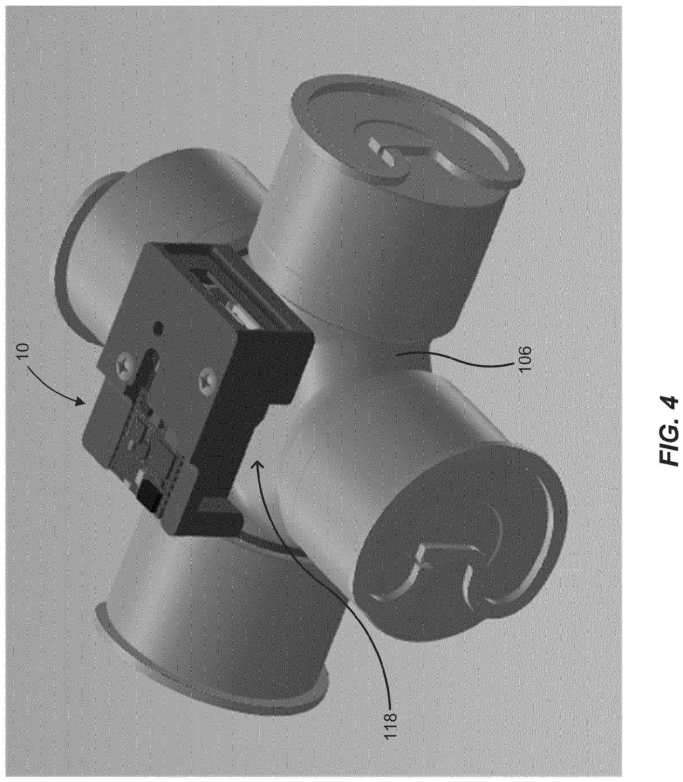

Figs. 4-6 illustrate the monitoring device 10 mounted on a mechanical component 110, such as a universal joint (as shown), a gear box, a shaft, etc. The monitoring device 10 may be mounted to other components of a vehicle, particularly, other components which move or rotate relative to a support (e.g., a frame of a vehicle or equipment).

Figs. 4-6 illustrate the monitoring device connected to a trunnion 106 of a universal joint 110. The trunnion 106 includes (see Fig. 5) a housing defining a port 118 for supplying lubricant to the internal components (partially shown). The illustrated lubricant port 118 is threaded and otherwise receives a closure member (not shown; e.g., a plug, a cover, a grease fitting, etc.) to close the port 118.

As shown in Fig. 5, with the closure member removed from the port 118, a portion of the monitoring device 10 is inserted into the port 118. Specifically, in the illustrated construction, the threaded portion 22 of the device housing 14 threadedly engages complementary threads (not shown) of the port 118 to connect the monitoring device 10 to the trunnion 106. In this position, the monitoring device 10 will also function to plug or close the port 118. Mounting the housing 14 to the component 110 using a threaded interface allows the monitoring device 10 to be easibly removable, replaceable, etc.

As shown in Fig. 6, the trunnion 106 is assembled with other components (e.g., the yokes, etc.) of the universal joint 110. The profile of the housing 14 is optimized such that, while containing the selected electronic components, providing protection to those components, etc., the monitoring device 10 does not impede movement of the components of the universal joint 110. In the illustrated construction, the housing 14 has a height of approximately 10 mm and a diameter (or maximum width) of 25 mm.

Once the monitoring device 10 is coupled to the trunnion 106, the monitoring device 10 is capable of measuring characteristics of the universal joint 110, of the associated vehicle, etc., without impacting operation of the universal joint 110 (e.g., without impeding relative movement of nearby components) or the associated vehicle. Also, the connection between the monitoring device 10 and the universal joint 110 (e.g., between the threaded portion 22 and the threaded port 118) inhibits inadvertent disconnection of the monitoring device 10 from the universal joint 110 that may be caused due to movement of the monitoring device 10 (e.g., the threads working loose due to movement of the universal joint 110, vibration, etc.).

In some examples, the monitoring device 10 is also operable to provide information (e.g., position) that allows remote or automatic control of the vehicle in which the monitoring device 10 is positioned. For example, a location of a tractor operating within a field may be determined based on the position and angle of the universal joint 110, which are determined by the accelerometer 58a and/or the gyroscope 58d. By determining these characteristics of the universal joint 110, the controller 54 and/or the external electronic device 74 may determine the operation of the tractor (e.g., straight-line driving, turning, etc.) and map the path of the tractor within the area of a field.

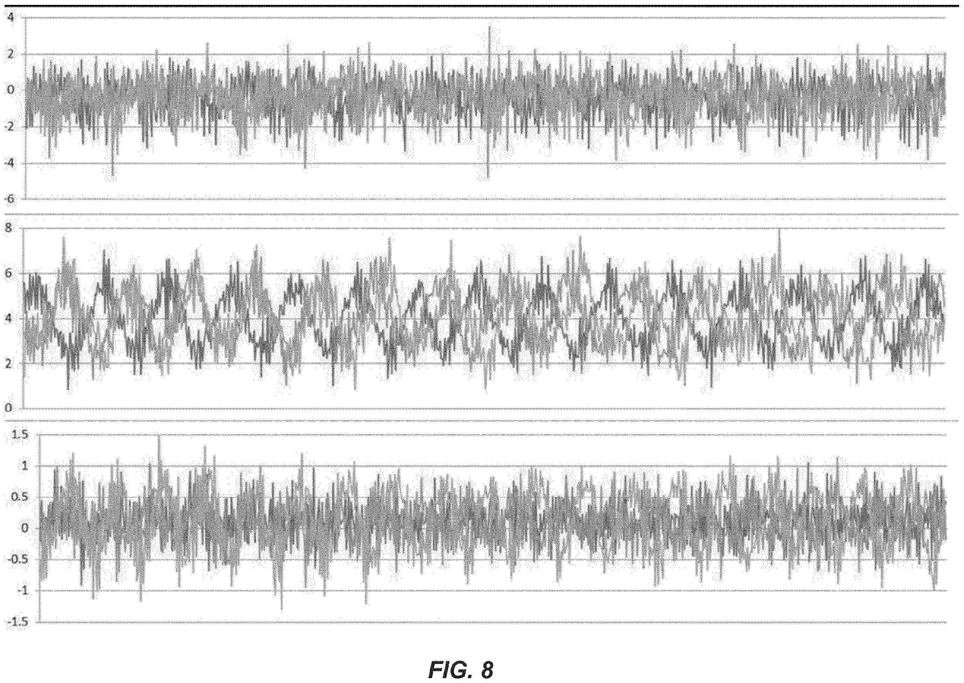

Fig. 8 illustrates example output signals from the sensors 58a-58f of the monitoring device 10. The controllers 54, 74 may analyze the signals to determine the sensed characteristics of the component 110. Based on this analysis, decisions (manual, automated, combinations) on control and operation of the component 110 and the vehicle (e.g., continue, modify, stop operation, schedule maintenance, alert user, etc.) may be made.

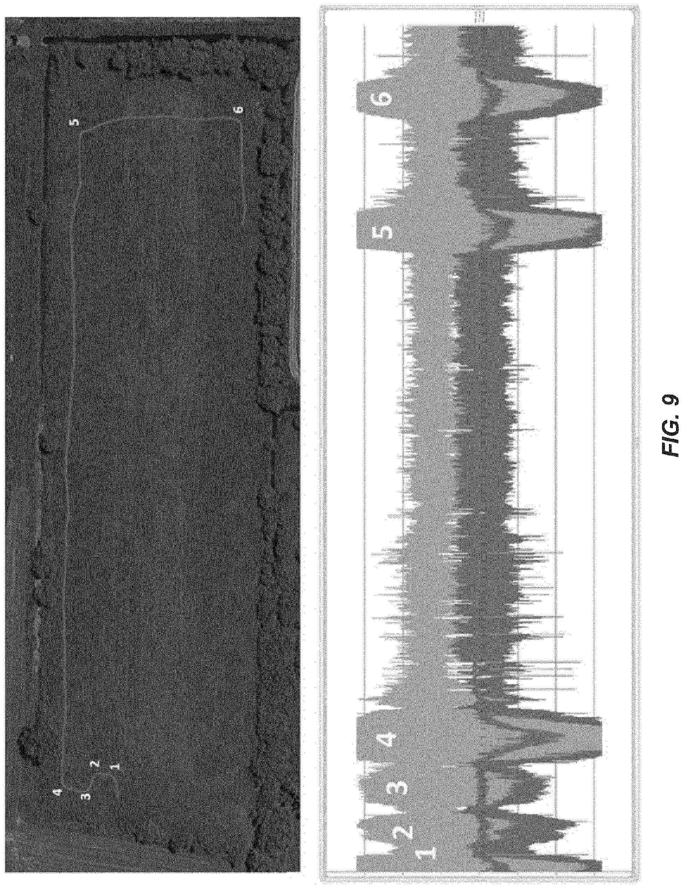

Fig. 9 illustrates example data compared to a path of a tractor in a field. As illustrated, the amplitude of the data recorded indicates how sharp each turn was. Based on a review of the data, turns 1, 2, and 3 were not sharp turns while turns 4, 5, and 6 were sharper turns of approximately 90 degrees.

The embodiment(s) described above and illustrated in the figures are presented by way of example only and are not intended as a limitation upon the concepts and principles of the present disclosure. As such, it will be appreciated that variations and modifications to the elements and their configuration and/or arrangement exist within the spirit and scope of one or more independent aspects as described.

One or more independent features and/or independent advantages of the invention may be set forth in the following claims.

## Claims

1. A monitoring device for use with a universal joint, the universal joint including a joint housing operable to move relative to a support and defining a threaded port, the device comprising:
a device housing including a body portion and a threaded portion extending from the body portion, the threaded portion being configured to be inserted into and threadedly engage the port to connect the device housing to the component housing for movement with the joint housing relative to the support; and
a sensor positioned within the device housing to sense at least one characteristic of the universal joint.

2. The device of claim 1, wherein the sensor includes one of an accelerometer, a temperature sensor, a light sensor, a gyroscope, a microphone, or a clock.

3. The device of claim 2, further comprising a second sensor positioned within the device housing, the second sensor including a different one of an accelerometer, a temperature sensor, a light sensor, a gyroscope, a microphone, or a clock.

4. The device of any one of the preceding claims, further comprising a controller positioned within the device housing and operable to communicate with the sensor.

5. The device of any one of the preceding claims, further comprising a transceiver positioned within the device housing and operable to communicate between the controller and an electronic device external to the device.

6. The device of claim 5, wherein the transceiver is operable to communicate at predetermined intervals.

7. The device of claim 5 or 6, wherein the transceiver is operable to communicate after a sensed characteristic reaches a threshold.

8. The device of any one of the preceding claims, further comprising an energy storage device positioned within the device housing and operable to power electronic components supported in the housing.

9. The device of claim 8, further comprising an energy harvester positioned within the device housing and operable to generate energy to recharge the battery.

10. The device of any one of the preceding claims, wherein the sensor is positioned within the threaded portion of the device housing.

11. The device of any one of the preceding claims, wherein the body portion has a diameter of about 25 mm and a height of about 10 mm.

12. The device of any one of the preceding claims, including one or more of the following features:
(i) wherein the device housing is waterproof; or
(ii) wherein the device housing is shock resistant.

13. An assembly comprising:
a mechanical component including a component housing operable to move relative to a support and defining a threaded port; and
a monitoring device including
a device housing including a body portion and a threaded portion extending from the body portion, the threaded portion being configured to be inserted into and threadedly engage the port to connect the device housing to the component housing for movement with the component housing relative to the support, and
a sensor positioned within the device housing to sense at least one characteristic of the component.

14. The assembly of claim 13, including one or more of the following features:
(i) wherein the mechanical component includes a universal joint, the universal joint including a trunnion with a trunnion housing providing the component housing and defining the threaded port, and wherein the threaded port includes a lubricant port;
(ii) wherein the sensor includes one of an accelerometer, a temperature sensor, a light sensor, a gyroscope, a microphone, or a clock;
(iii) further comprising a controller positioned within the device housing and operable to communicate with the sensor;
(iv) further comprising a transceiver positioned within the device housing and operable to communicate between the controller and an electronic device external to the device; or
(v) wherein the sensor is positioned within the threaded portion of the housing.

15. A method for assembling a monitoring device with a universal joint, the monitoring device including a housing including a body portion and a threaded portion extending from the body portion and a sensor supported in the housing, the method comprising:
removing a cover from a lubricant port defined in a trunnion housing of the universal joint;
inserting the threaded portion of the monitoring device into the port; and
threadedly engaging the threaded portion and the port.
